(19) Europäisches Patentamt
European Patent Office
Office européen des brevets

(11) Publication number: 0 240 313 B1

# EUROPEAN PATENT SPECIFICATION

(45) Date of publication of patent specification: **22.01.92**    (51) Int. Cl.[5]: **A23L 1/0522**, A23L 1/187

(21) Application number: **87302792.4**

(22) Date of filing: **31.03.87**

(54) **Dry food composition.**

(30) Priority: **01.04.86 GB 8607920**

(43) Date of publication of application:
**07.10.87 Bulletin 87/41**

(45) Publication of the grant of the patent:
**22.01.92 Bulletin 92/04**

(84) Designated Contracting States:
**AT BE CH DE ES FR GB GR IT LI NL SE**

(56) References cited:
**EP-A- 0 110 549      EP-A- 0 157 491**
**FR-A- 1 471 950      GB-A- 888 687**
**US-A- 2 475 554      US-A- 3 583 874**

**STÄRKE, vol. 37, no. 6, 1985, pages 181-191, VCH Verlagsgesellschaft mbH, Weinheim, DE; R. HOOVER et al.: "Studies on the functional characteristics and digestibility of starches from Phaseolus vulgaris biotypes"**

**FOOD PRODUCT DEVELOPMENT, vol. 13, no. 7, 1979, pages 48-49; S. KON et al.: "Process development adds scope to bean products"**

**Ms. Christiane Mercier: Proceedings "Pasta and Extrusion Cooked foods", Milan (March 1985)**

(73) Proprietor: **CPC INTERNATIONAL INC.**
**International Plaza P.O. Box 8000**
**Englewood Cliffs New Jersey 07632(US)**

(72) Inventor: **Glittenberg, Detlev, Dr.**
**Freidhofstrasse 13/2**
**W-7102 Weinsberg(DE)**
Inventor: **Stute, Rolf, Dr.**
**Bissackerweg 7**
**W-7101 Flein(DE)**

(74) Representative: **Wilkinson, Stephen John et al**
**Stevens, Hewlett & Perkins 1 St. Augustine's Place**
**Bristol BS1 4UD(GB)**

## Description

The present invention relates to a dry food composition, in particular to a dry food composition adapted to be used in the production of desserts.

European patent publication 157 491 describes a dessert which comprises a pastry case and a flavoured filling in which the filling is a mix which can be reconstituted to form a set or gelled starch-based filling without any need for cooking ie by adding ordinary tap water, cold water, cold milk or the like. The problems of devising such a filling are described in the European patent since typical native starch, which usually forms the basis of such fillings is incapable of achieving the requisite degree of swelling, absorption and loss of birefringence in unheated media to produce a viscous gelled or set product in the time period desirable for convenience food items.

In practice, modified starches are known which can form the basis of cold-water reconstitutable fillings but the mere fact of modification can adversely affect other desired textural properties in the starch based filling. A further problem which arises in the formulation of a starch based cold-water reconstitutable filling arises from the fact that other components in the composition may have an adverse affect on an otherwise suitable starch. Thus, the presence of acidic substances as in citrus flavoured fillings or the use of milk rather than water as the reconstituting agent can result in a product which no longer gels satisfactorily under ambient temperature conditions.

European patent publication 157 491 describes the properties required in a starch for the type of application described above and discloses that a suitable starch is described in US Patent No. 4 465 702 and European patent publication 110 549, ie a type of corn starch which has been treated under conditions of elevated temperature and pressure in a selected alcohol.

European patent publication 157 491 is concerned with pie fillings but there exists a market for other desserts, not based on pastry, of the pudding type, which are in dry form and are adapted to be reconstituted by the addition of cold aqueous liquid to form a smooth textured gel. Puddings of this type present similar problems to the pie fillings discussed above, ie they may need to contain acidic flavourings and may be designed to be reconstituted with aqueous liquids other than water alone eg milk or even wine.

US patent no. 2 475 554 discloses a process for the manufacture of dry foodstuffs in cooked condition from leguminosae in which the comminuted leguminosae are precooked and then heated in the presence of water to a high temperature above the gelatinization point.

European patent publication 110 549 gives a good prior art survey on starch materials for food systems. There is a demand for a chemically unmodified, cold swelling and gel forming starch product. This demand has been responded to by the process of EP-A 110 549 in which corn starch is treated in selected aqueous alcohols at high temperature and pressure. We have now found that we can prepare a chemically unmodified, cold swelling and gel forming pregelatinised starch from legume starches without employing alcohols, which forms a product which is reconstitutable by a cold aqueous liquid to give a smooth gel, meets the requirements of a dry pie filling or pudding mixture and which is particular useful for the preparation of desserts.

This product contains an effective amount of a pregelatinised legume starch which confers on the composition a bland flavour (in the absence of a flavour imparting additive), good shear stability, good enzyme stability and low lipid concentration.

Legume starches are, of course, known products and have been the subject of a number of studies. For example, in an article in "Stärke" 37 (1985) Nr. 6 pp 181 to 191 there is a report of "Studies on the Functional Characteristics and Digestibility of Starches from Phaseolus vulgaris Biotypes" in which it is said that the main starches of commerce are corn, tapioca, wheat, potato and sorghum and that legume starches are not widely used due in part to their lack of availability. The studies were undertaken therefore to obtain more information on the chemistry, physical and functional properties of the legume starches. The legumes studied were black bean, northern bean, navy bean, kidney bean and pinto bean, but the investigations were limited to the natural granular starch and although swelling power, solubility, gelatinisation temperature and Brabander viscosity properties were examined, most tests were carried out at elevated temperatures. Thus the Brabander visco/amylo/graphs were used to determine pasting properties at 76° to 82° C in the presence and absence of acids and alkalis. The article contains a recommendation for the use of Phaseolus starches as thickeners in the canning industry by reason of their high resistance under shear at 95° C and pH 5.5, but warns that viscosity breakdown at high pH limits their applicability. There is therefore in the Stärke article no indication that the legume starches, when pregelatinised, could possess premium properties in dry formulations for reconstitution with cold aqueous liquids.

A presentation by Ms. Christiane Mercier in Proceedings "Pasta and Extrusion Cooked Foods" Milan, March 1985, describes the modification of starches by extrusion and drum (roll) drying. In the article it is pointed out that cereal, tuber and legume starches have been modified by drum drying, and lipids and sucrose added during the treatment to obtain pregelatinised instant food. Drum drying is explained as the spreading of a hot starch paste between rolls or drums to produce a dry flake product and it is said that the slurries obtained by drum drying, known as pregelatinised starches, have the common property of being dispersible in cold water, the dispersions showing less thickening and gelling power than corresponding freshly-cooked pastes prior to drying. The detailed studies in the article are concerned with the comparison of drum drying and extrusion for wheat, manioc and pea starches and their corresponding fours, but although viscosity measurements are reported, they are carried out at elevated temperatures above 50°C.

The teaching of the Stärke and Mercier articles discussed above does not point to pregelatinised legume starches having premium properties in forming cold-water gels particularly when such gels are not formed with water alone but with milk or under acid conditions. At most, the references equate the gelling characteristics in cold water of pregelatinised legume starches with other starches and point rather to the use of legume starches under conditions of elevated temperature to give a thickening effect.

Accordingly, the present invention is a dry food composition adapted to be used in the production of a dessert which is reconstitutable by a cold aqueous liquid to give a smooth textured stable gel and which comprises a sweetening component, starch, and, optionally, one or more flavouring and/or colouring agents characterised in that at least part of the starch is pregelatinised legume starch.

The legume starches which may be used in the product of the invention may be derived from Phaseolus vulgaris (Common bean), Phaseolus aureus (mung bean), Phaseolus mungo (urd bean - radiatus, Vigna radiata), Phaseolus crysantus (adzuki bean), Phaseolus aconitifolius (moth bean), Phaseolus lunatis (small lima bean), Dolichos lablab (lablab bean), dolichos biflorus, Vicia faba (broad bean), Psophocarpus tetragonolobus, (winged bean), Cicer arietum (chick pea), Cajanus cajan (pigeon pea), Vigna unguiculata (sinensis - Southern pea), Pisum sativum (baby garden pea) and/or Lens culinaris (lentil).

Preferably the starch in the composition has a particle size of less than 0.1 mm, more preferably less than 0.08 mm ie the particles pass through a sieve having holes of this diameter. Although only 50% of the total starch, preferably 75%, more preferably 90% of the total starch may be the legume starch, it is customary for all the starch in the composition to be pregelatinised legume starch.

The legume starch is at least partially pregelatinised under "gentle" conditions and by "gentle" we mean the severity of conditions such as are commonly encountered in a conventional roll drying process in which the starch is gelatinised under the influence of heat but without being exposed to major shearing forces or to temperatures much in excess of 100°C. The aim of the pregelatinisation is to obtain sufficient gelatinisation to produce a smooth gel but not so much as to destroy the gel strength completely.

Each legume starch has its optimum pregelatinisation conditions and when certain legume starches, eg. pea starch are used in the product of the invention we have found that the latter is improved if the legume starch is first heated at a temperature above 100° C eg 120 to 160° C, preferably about 140° C and is then roll dried as described above. The legume starch may be preheated for a period of, for example, up to 10 minutes depending upon the apparatus used (eg. 4 minutes in a jet cooker at 140° C). This treatment results in a composition which gives a smoother textured gel. With lentil and mung bean starches however such a smooth textured gel may be obtained merely by pregelatinisation through roll drying although lentil starch gives a firmer, blander flavoured gel than does mung bean starch. The optimum pregelatinisation treatment for a given legume starch can be determined without undue experimentation on the part of the operator and a guide to the extent of pregelatinisation is given by following the cold water solubility of the legume starch in the course of the pregelatinisation treatment. The cold water solubility may be determined under standard conditions using a Waring blender as is described subsequently in the specification in the section entitled "Examples". Under the conditions therein described a cold water solubility of 70% or more is preferred, more preferably 75% or more, particularly 80% or more, a cold water solubility of about 85 to 90% as with lentil starch giving an excellent product.

Generally the pregelatinised legume starches used in the composition according to the invention are starches which contain between 25 and 60 weight% amylose, more usually 30 to 50 weight% amylose.

The sweetening component of the composition according to the invention may be any sweetener conventionally used in commercial dessert formulations eg. sucrose, fructose, glucose, a corn syrup, a hydrogenated corn syrup or combinations of these sweeteners. Artificial sweeteners such as saccharine may also form part of this component of the composition.

The composition according to the invention is particularly well adapted to contain an acidic flavouring agent eg a citric acid based flavour such as orange, lemon or lime. The flavour need not necessarily be acidic however and may be an essence such as vanilla, banana, coconut etc. The colouring agent may be any such product acceptable under the relevant food law and may be the colour imparted by a flavouring component of the composition eg. chocolate or coffee.

The composition may comprise 2 to 98% by weight starch, the balance being made up by the sweetener, flavour and/or colour components. Generally the composition will contain 20 to 80% by weight starch, 80 to 20% by weight sweetener and 0.001 to 15% by weight flavour/colour component. Preferred compositions contain 20 to 60% by weight starch, 70 to 30% by weight sweetener, the balance being the flavour and/or colour component.

The compositions according to the invention may be prepared by blending the preglatinised legume starch with the other ingredients. Alternatively, the granular legume starch may be blended with one or more of the other ingredients prior to or during the pregelatinisation process eg. during pregelatinisation by roll drying. The composition may also be agglomerated to assist dispersion in the cold aqueous liquid.

The dry food compositions of the invention are capable of being reconstituted by a wide range of cold (eg. 5° to 30°C) aqueous liquids. In particular, they are capable of reconstitution by fresh milk, buttermilk, soured milk (ie. lactobacillus fermented milk), fruit juice or wine. The compositions may also contain a percentage (25 to 50% by weight) of dried milk solids and/or dried egg (10 to 30% by weight) and still remain reconstitutable with cold water to give the desired smooth gel. The action necessary for reconstitution is to add the composition to the cold aqueous liquid, preferably with stirring and then to wait, typically for 30 to 60 minutes for the mixtures to set to the desired gel.

The invention will now be further described with reference to the following Examples.

Examples

The cold water solubility of a given pregelatinised legume starch may be determined by the method described in European patent publication 110 549 page 22 ie.

1. Measure exactly 100 ml of distilled water at ambient temperature into the Waring Blender cup.

2. Turn the blender on slow speed (about 6100 rpm) and add 1,000 gram of starch sample over less than a 15 second period, then stir for 2 minutes on high speed (about 13,500 rpm).

3, Fill a 100 ml centrifuge tube with the starch solution/suspension and centrifuge at maximum speed (3100 rpm is satisfactory) for 15 minutes.

4. Transfer a 25 ml aliquot of the supernatant to a tared evaporating dish and evaporate on a steam bath to apparent dryness.

5. Dry in an oven at 110°C for at least 1 hour (over night is satisfactory) and weigh.

Cold water solubility, expressed as percent water solubles (dsb), is then calculated according to the following formula:

$$\text{water solubles (dsb)} = \frac{(\text{wt. of solids in 25 ml}) \times 4}{(\text{wt. of sample}) \times \dfrac{(100\% \text{ Moisture})}{100}} \times 100$$

The cold water solubilities of a number of legume starches determined by the above method are given in the following Table.

| Cold Water Solubilities | | |
|---|---|---|
| Starch | Treatment | Solubility % |
| Mung Bean | Roll dried | 96 |
| Lentil | Roll dried | 88 |
| Pea | Preheated and Roll dried | 85 |
| Pea | Roll dried pH 5.0 | 78 |
| Pea | Roll dried pH 3.2 | 74 |

The following Examples 1 to 5 describe formulations according to the invention in which the sucrose component was finely milled and the starches had of particle sizes in the range 0.04 to 0.07 mm.

Example 1

VANILLA PUDDING

4

A preformed mixture of

30 g Pregelatinised lentil starch

50 g Sucrose

0,4 g Vanilla flavouring

0,01 g Colouring E 104

0,004 g Colouring E 110

was added to 0.5 l milk of refrigerator to ambient temperature while stirring with an electric hand mixer. Stirring was continued for 1 - 2 minutes and the mass was then poured into a mould. After 30 to 60 minutes in a refrigerator the pudding was taken out of the mould in the form of a firm, smooth textured gel which retained the shape of the mould.

Instead of the 30 g pregelatinised lentil starch there was employed

33 g Pregelatinised pea starch or

35 g Pregelatinised mung bean starch or

35 g Pregelatinised vicia faba starch.

The organoleptic qualities of the resulting gels vary with the starch used, but, in every case, the puddings formed firm gels.

Example 2

CHOCOLATE PUDDING

A preformed mixture containing

37,5 g Pregelatinised lentil starch

62,5 g Sucrose

10,0 g Cocoa

was added to 500 ml milk of refrigerator to ambient temperature while stirring. Stirring was continued for 1 - 2 minutes and the mass was then poured into a mould. After 30 to 60 minutes in a refrigerator the pudding was removed from the mould retaining its shape as a firm, smooth textured gel.

Example 3

FRUIT BLANCMANGE

A preformed mixture of

30 g Pregelatinised lentil starch

50 g Sucrose

was stirred into 500 ml of a commercially available fruit juice (apple juice, cherry juice or black currant juice) at refrigerator to ambient temperature. Stirring was continued for 1 - 2 minutes and the mass was then poured into a mould. After 30 to 60 minutes in a refrigerator the pudding was turned out of the mould in the form of a firm gel which retained its shape.

Instead of the fruit juice a 1:1 mixture of water and wine or mixtures of fruit juice and sour milk products (buttermilk, kefir) have been used. In addition fruit pieces or small whole fruits (e.g. berries, cherries) have been added to the compositions without affecting the stability of the gel.

Example 4

VANILLA CREME

A preformed mixture of

19,75 g Pregelatinised lentil starch

31,25 g Sucrose

10,00 g 'Crystal Egg White'

was stirred into 250 ml cold milk by means of an electric hand mixer equipped with a wire whisk. Stirring was continued for 1 - 2 minutes and the mass then poured into a mould. After 1 hour in a refrigerator a pudding having an aerated, creamy texture was obtained, which could be turned out of the mould while retaining its shape.

Example 5

VANILLA PUDDING

A preformed mixture of

34,2 g Pregelatinised lentil starch

57,0 g Sucrose

70,1 g Milk powder

0,46 g Flavouring

0,022 g Colouring E 104

0,005 g Colouring E 110

was added while stirring with an electric hand mixer into 500 ml water of refrigerator to ambient temperature. Stirring was continued for 1 - 2 minutes and the mass was then poured into a mould. After 30 to 60 minutes in a refrigerator the pudding was removed from the mould as a firm gel which retained its shape.

**Claims**

1. Use of a pregelatinized legume starch having been pregelatinized by roll drying at a temperature of from above 100 °C to 160 °C, as a cold reconstitutable and smooth stable gels forming ingredient for desserts.

2. A dry food composition adapted to be used in the production of a dessert which is reconstitutable by a cold aqueous liquid to give a smooth textured stable gel and which comprises a sweetening component, starch, and, optionally, one or more flavouring and/or colouring agents characterised in that at least part of the starch is a legume starch having been pregelatinised at a temperature of from above 100 °C to 160 °C and by roll drying.

3. A composition according to claim 2 characterised in that the legume starch is derived from Phaseolus vulgaris, Phaseolus aureus, Phaseolus mungo (radiatus, Vigna radiata), Phaseolus crysantus, Phaseolus aconitifolius, Phaseolus lunatis, Dolichos lablab, dolichos biflorus, Vicia faba L., Psophocarpus tetragonolobus, Cicer arietum, Cajanus cajan, Vigna unguiculata (sinensis), Pisum sativum L. and/or Lens culinaris.

4. A composition according to claim 2 or 3 characterised in that the starch in the composition has a particle size less than 0.08 mm.

5. A composition according to any one of claims 2 - 4 characterised in that all the starch in the composition is pregelatinized legume starch.

6. A composition according to any one of claims 2 - 5 in which the legume starch is pea starch.

7. A composition according to any one of claims 2 - 6 characterised in that the cold water solubility of the legume starch is 75 % or more, particularly 85 to 90%.

8. A composition according to any one of claims 2 - 7, characterised in that the legume starch contains 30 to 50 weight% amylose.

9. A composition according to any one of claims 2 - 8 characterised in that the sweetening component comprises sucrose, fructose, glucose, a corn syrup, a hydrogenated corn syrup, an artificial sweetener such as saccharine or combinations of these sweetening components.

10. A composition according to any one of claims 2 - 9 characterised in that it contains as flavouring agent an acidic flavour such as orange, lemon or lime; vanilla flavour, banana flavour, coconut flavour, chocolate or coffee.

11. A composition according to any one of claims 2 - 10 characterised in that it contains 20 to 80 % by weight starch, 80 to 20 % by weight sweetener and 0.001 to 15 % by weight flavour/colour agent.

**Revendications**

1. Utilisation d'un amidon prégélatinisé de légume, ayant été prégélatinisé par séchage sur cylindre à une température de plus de 100°C à 160°C, sous forme d'un ingrédient pour desserts, reconstituable à froid et formant des gels stables lisses.

2. Composition alimentaire sèche apte à l'utilisation dans la production d'un dessert, qui est reconstituable au moyen d'un liquide aqueux froid en donnant un gel stable à texture lisse, et qui comprend un constituant édulcorant, de l'amidon et, facultativement, un ou plusieurs agents aromatisants et/ou colorants, caractérisée en ce qu'au moins une partie de l'amidon est un amidon de légume ayant été prégélatinisé à une température de plus de 100°C à 160°C et par séchage sur cylindre.

3. Composition suivant la revendication 2, caractérisée en ce que l'amidon de légume est extrait de Phaseolus vulgaris, Phaseolus aureus, Phaseolus mungo (radiatus, Vigna radiata), Phaseolus crysantus, Phaseolus aconitifolius, Phaseolus lunatis, Dolichos lablab, Dolichos biflorus, Vicia faba L., Psophocarpus tetragonolobus, Cicer arietum, Cajanus cajan, Vigna unguiculata (sinensis), Pisum sativum L. et/ou Lens culinaris.

4. Composition suivant la revendication 2 ou 3, caractérisée en ce que l'amidon présent dans la composition possède un diamètre de particules inférieur à 0,08 mm.

5. Composition suivant l'une quelconque des revendications 2 à 4, caractérisée en ce que la totalité de l'amidon présent dans la composition est un amidon prégélatinisé de légume.

6. Composition suivant l'une quelconque des revendications 2 à 5, dans laquelle l'amidon de légume est l'amidon de pois.

7. Composition suivant l'une quelconque des revendications 2 à 6, caractérisée en ce que la solubilité dans l'eau froide de l'amidon de légume est égale ou supérieure à 75 %, en particulier égale à une valeur de 85 à 90 %.

8. Composition suivant l'une quelconque des revendications 2 à 7, caractérisée en ce que l'amidon de légume contient 30 à 50 % en poids d'amylose.

9. Composition suivant l'une quelconque des revendications 2 à 8, caractérisée en ce que le constituant édulcorant consiste en saccharose, fructose, glucose, un sirop de glucose, un sirop de glucose hydrogéné, un édulcorant artificiel tel que la saccharine ou bien des mélanges de ces constituants édulcorants.

10. Composition suivant l'une quelconque des revendications 2 à 9, caractérisée en ce qu'elle contient, comme agent aromatisant, un arôme acide tel que l'arôme d'orange, de citron ou de limon ; un arôme de vanille, un arôme de banane, un arôme de noix de coco, du chocolat ou du café.

11. Composition suivant l'une quelconque des revendications 2 à 10, caractérisée en ce qu'elle contient 20 à 80 % en poids d'amidon, 80 à 20 % en poids d'édulcorant et 0,001 à 15 % en poids d'agent aromatisant/colorant.

**Patentansprüche**

1. Verwendung einer vorgelatinisierten Leguminosenstärke, die durch Walzentrocknung bei einer Temperatur von mehr als 100°C bis 160°C gelatinisiert wurde, als in der Kälte rekonstituierbarer und glatte stabile Gele bildender Inhaltsstoff für Desserts.

2. Trockene Nahrungsmittelzusammensetzung geeignet, um zur Herstellung eines Desserts verwendet zu werden, die mit einer kalten wäßrigen Flüssigkeit rekonstituierbar ist, wobei sich ein glatt texturiertes stabiles Gel ergibt und eine Süßungskomponente, Stärke und gegebenenfalls ein oder mehrere Aroma- und/oder Farbstoffe enthält,
**dadurch gekennzeichnet,**
daß mindestens ein Teil der Stärke eine Leguminosenstärke ist, die bei einer Temperatur von mehr als 100 ° C bis 160 ° C und durch Walzentrocknung vorgelatinisiert wurde.

3. Zusammensetzung nach Anspruch 2,
**dadurch gekennzeichnet,**
daß die Leguminosenstärke sich von Phaseolus vulgaris, Phaseolus aureus, Phaseolus mungo (radiatus, Vigna radiata), Phaseolus crysantus, Phaseolus aconitifolius, Phaseolus lunatis, Dolichos lablab, Dolichos biflorus, Vicia faba L., Psophocarpus tetragonolobus, Cicer arietum, Cajanus cajan, Vigna unguiculata (sinensis), Pisum sativum L. und/oder Lens culinaris ableitet.

4. Zusammensetzung nach Anspruch 2 oder 3,
**dadurch gekennzeichnet,**
daß die Stärke in der Zusammensetzung eine Teilchengröße von weniger als 0,08 mm hat.

5. Zusammensetzung nach einem der Ansprüche 2 bis 4,
**dadurch gekennzeichnet,**
daß die gesamte Stärke in der Zusammensetzung vorgelatinisierte Leguminosenstärke ist.

6. Zusammensetzung nach einem der Ansprüche 2 bis 5,
**dadurch gekennzeichnet,**
daß die Leguminosenstärke Erbsenstärke ist.

7. Zusammensetzung nach einem der Ansprüche 2 bis 6,
**dadurch gekennzeichnet,**
daß die Kaltwasserlöslichkeit der Leguminosenstärke 75 % oder mehr, insbesondere 85 bis 90 % ist.

8. Zusammensetzung nach einem der Ansprüche 2 bis 7,
**dadurch gekennzeichnet,**
daß die Leguminosenstärke 30 bis 50 Gew.% Amylose enthält.

9. Zusammensetzung nach einem der Ansprüche 2 bis 8,
**dadurch gekennzeichnet,**
daß die Süßungskomponente Saccharose, Fructose, Glucose, Maissirup, hydrierten Maissirup, einen künstlichen Süßstoff wie Saccharin oder Kombinationen dieser Süßungskomponenten umfaßt.

10. Zusammensetzung nach einem der Ansprüche 2 bis 9,
**dadurch gekennzeichnet,**
daß sie als Aromastoff ein saures Aroma wie Orange, Zitrone oder Limone; Vanillearoma, Bananenaroma, Kokosnußaroma, Schokolade oder Kaffee enthält.

11. Zusammensetzung nach einem der Ansprüche 2 bis 10,
**dadurch gekennzeichnet,**
daß sie 20 bis 80 Gew.% Stärke, 80 bis 20 Gew.% Süßungsmittel und 0,001 bis 15 Gew.% Aroma/Farbstoff enthält.